# FASCICULE DE BREVET EUROPEEN

(11) **EP 4 066 079 B1**
(45) Date de publication et mention de la délivrance du brevet: **06.12.2023**
(21) Numéro de dépôt: 20811355.5
(22) Date de dépôt: 26.11.2020
(51) Int. Cl.: G05D 1/08, G08G 5/00, B64C 27/00, G08G 5/02, G08G 5/04, B64C 13/04, B64C 13/08, B64C 13/22, B64C 27/56, B64C 27/57, B64C 13/18

(54) **SYSTÈME DE PILOTAGE D'AÉRONEF**
FLUGZEUGSTEUERUNGSSYSTEM
AIRCRAFT PILOTING SYSTEM

(30) Priorité: 27.11.2019 FR 1913295
(43) Date de publication de la demande: 05.10.2022
(73) Titulaire: THALES, 92400 Courbevoie (FR)
(72) Inventeur: CANTALOUBE, Christian, 33700 MERIGNAC (FR)
(74) Mandataire: Lavoix
(86) Numéro de dépôt international: PCT/EP2020/083544
(87) Numéro de publication internationale: WO 2021/105303

(56) Documents cités:
- WO-A1-2019/116101
- WO-A2-2019/130280
- WO-A2-2019/135791
- US-A1- 2018 244 384
- US-A1- 2018 362 158

## Description

La présente invention concerne un système de pilotage d'aéronef comportant un système de pilotage automatique embarqué et une interface homme-machine comportant des organes de commande actionnables par un opérateur.

L'invention se situe dans le domaine de l'aéronautique, et plus particulièrement dans le domaine du pilotage des aéronefs.

A l'heure actuelle sont développés des aéronefs de type taxis aériens VTOL (pour « Vertical Take-Off and Landing »), qui sont destinés au transport de passagers, par exemple en milieu urbain. Du fait de leur nombre, ces appareils sont destinés, à terme, à être surveillés à distance sans pilote à bord.

Le document US2018/0244384 A1 décrit un aéronef sans pilote à bord, destiné à transporter des passagers, l'aéronef étant plus particulièrement du type multi-rotor, à décollage et atterrissage vertical (VTOL pour « vertical take-off and landing »).

Le document WO2019/135791 A2 concerne un aéronef de transport à décollage/atterrissage à la verticale (VTOL), et décrit plus particulièrement l'automatisation d'opérations entre l'aéronef et les stations d'atterrissage/décollage, et la liaison entre l'aéronef et des véhicules terrestres.

Le document WO2019/130280 A2 décrit des systèmes et des méthodes pour commander des aéronefs autonomes.

Le document WO2019/116101 A1 décrit un aéronef de type VTOL à géométrie variable, pour un transport de passagers autonome ou semi-autonome.

Le document US 2018/0362158A1 décrit un système de contrôle d'un aéronef sans pilote à bord.

Le développement de flottes de véhicules de type taxis aériens avec les règles actuelles de pilotage d'avion nécessiterait un nombre très élevé de pilotes qualifiés, ce qui semble difficilement envisageable. Par ailleurs, l'automatisation complète du pilotage sans intervention d'un pilote ou d'un opérateur humain pour des aéronefs destinés à évoluer en milieu urbain semble également difficile à envisager, à cause de la nécessité d'assurer la sécurité et minimiser au maximum tout risque de collision.

L'invention a pour objet de répondre à ces problèmes.

A cet effet, l'invention propose un système de pilotage d'aéronef comportant un système de commande configuré pour actionner des contrôles de vol de l'aéronef selon une trajectoire de vol préprogrammée conforme à la revendication 1.

Avantageusement, le système de pilotage d'aéronef proposé comporte une interface de commande ayant un nombre limité d'organes de commande permettant d'effectuer uniquement des commandes de pilotage parmi un ensemble prédéterminé de commandes de pilotage. La fonction de pilotage par un opérateur humain est allégée, et par conséquent la formation pour piloter un aéronef en utilisant un tel système de pilotage est également allégée.

Le système de pilotage d'aéronef selon l'invention peut également présenter une ou plusieurs des caractéristiques des revendications 2 à 12.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un synoptique d'un système de pilotage d'aéronef selon un mode de réalisation de l'invention ;
[Fig 2] la figure 2 représente schématiquement une première interface d'organes de commande selon un mode de réalisation de l'invention ;
[Fig 3] la figure 3 représente schématiquement une deuxième interface d'organes de commande selon un mode de réalisation de l'invention.

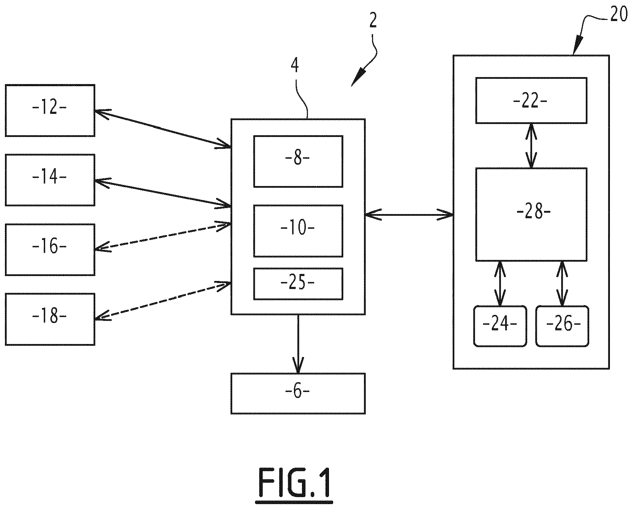

La figure 1 illustre schématiquement un système 2 de pilotage d'un aéronef, qui comporte un système de commande 4 adapté à commander des systèmes 6 de contrôle de l'aéronef.

Les systèmes de contrôle 6 comportent notamment, de manière connue, des gouvernes de profondeur et de direction, un dispositif de contrôle du ou des moteurs et /ou du pas des propulseurs, un système de freinage aérodynamique etc...

Le système de commande 4 est configuré pour provoquer un changement de la trajectoire et de l'orientation de l'aéronef via son action sur les systèmes de contrôle 6.

Le système de commande 4 est, dans un mode de réalisation, un dispositif électronique configuré pour mettre en oeuvre un système de pilotage automatique 8 et un système 10 de pilotage qui est configuré pour réaliser le pilotage en réception de commandes d'un opérateur de pilotage. L'action du système de commande 4 sur les systèmes de contrôle 6 est effectuée par des technologies de pilotage d'aéronef connues.

Le système de commande 4 est en outre adapté à communiquer avec un système de détection anticollision 12, un système de navigation 14, et optionnellement avec un système 16 d'interface avec un contrôle aérien distant et un système 18 d'interface avec une station de gestion au sol des opérations.

Le système de détection anticollision 12 met en oeuvre divers capteurs non représentés, par exemple des caméras dans le domaine du visible et/ou de l'infrarouge, ainsi que des radars ou lidars, et des logiciels de détection d'intrus ou d'obstacles, par exemple par analyse automatique d'images, de calcul de risque de collision et de proposition d'évitement au système de commande 4. Une proposition d'évitement consiste, dans un mode de réalisation, en une manoeuvre adéquate, par exemple : monter ou descendre, faire un écart latéral, ralentir, se mettre en vol stationnaire.

Le système de navigation 14 met en oeuvre des capteurs, par exemple récepteurs de signaux de géolocalisation par satellite, pour calculer en temps réel la position géolocalisée de l'aéronef. Le système de navigation 14 met en oeuvre également, dans un mode de réalisation, des capteurs de type radars, lidars et caméras dans le domaine visible et/ou infrarouge, ainsi que des logiciels d'estimation de la position, de la vitesse et de la route de l'aéronef en temps réel. On entend ici par route la direction horizontale du vecteur de vitesse de l'aéronef.

Par exemple, le système de navigation 14 met en oeuvre des procédés d'odométrie visuelle, de corrélation image/carte géographique. Divers modes de mise en oeuvre de ces procédés sont connus dans le domaine de l'aéronautique. En variante ou en complément, des techniques conventionnelles utilisant des instruments de navigation de type magnétomètre, inclinomètre, accéléromètres, gyromètres, tube de Pitot sont mis en oeuvre.

Le système 16 d'interface avec un contrôle aérien distant comprend par exemple un système de communication par liaison radio, également appelé DATALINK, avec des systèmes de contrôle de trafic aérien au sol permettant de fournir des informations relatives au vol de l'aéronef en fonction d'autres aéronefs.

Le système 18 d'interface avec une station de gestion au sol des opérations comprend également un système de communication par liaison radio et permet de recevoir des commandes d'opérateurs au sol relatives à la mission de l'aéronef, par exemple un changement de plan de vol en cours de mission.

Le système de pilotage automatique 8 est configuré pour commander le vol de l'aéronef selon une trajectoire de vol préprogrammée, tout en prenant en considération des informations reçues des systèmes de détection anti-collision 12, de navigation 14, ainsi que des informations ou commandes reçues via les systèmes d'interface 16 et 18.

Les systèmes décrits ci-dessus doivent implémenter des fonctionnalités avec un niveau de sûreté de fonctionnement qui est certifié selon des règles de sécurité pré-établies dans le domaine de la navigation aérienne pour un fonctionnement satisfaisant en pilotage automatique.

Cependant, certaines fonctionnalités ne sont pas assurées de manière suffisamment fiable automatiquement, et une intervention humaine est nécessaire.

Selon l'invention, le système de pilotage 2 comporte en outre une interface homme-machine (IHM) 20 destinée à un opérateur humain qui assure certaines fonctions de pilotage, qui sera dénommé « opérateur de pilotage » ci-après.

A la différence des systèmes de pilotage classiques, dans le système de pilotage proposé, l'opérateur de pilotage ne peut pas prendre la commande de la totalité des fonctionnalités de pilotage, mais a seulement accès à un nombre limité et prédéterminé de commandes de pilotage, ce nombre limité étant strictement inférieur au nombre de commandes de pilotage destinées à un pilote qualifié dans un système de pilotage classique. A ce titre, l'opérateur de pilotage n'a pas besoin d'être un pilote qualifié sur un type d'aéronef donné.

L'IHM 20 comprend, dans le mode de réalisation de la figure 1, un dispositif de visualisation 22, par exemple un viseur tête haute également appelé HUD pour « Head-Up Display », qui permet à l'opérateur de pilotage de visualiser l'extérieur de l'aéronef avec des informations supplémentaires affichées en superposition de son champ de visualisation, selon des principes de réalité augmentée. Par exemple, un affichage de type HUD est effectué sur un dispositif optique semi-transparent et semi-réfléchissant, par exemple une lame de verre, positionné entre la position de l'opérateur de pilotage et la vitre du cockpit de l'aéronef, dans la direction de visualisation de l'opérateur de pilotage.

En variante, l'affichage de type HUD est effectué sur un écran situé devant un oeil ou les deux yeux de l'opérateur de pilotage et fixé via l'intermédiaire d'un casque ou de lunettes à la tête du pilote (viseur porté sur la tête ou Head Mounted Display). Avantageusement, le dispositif d'affichage de type HUD fournit une représentation synthétique du terrain ou paysage de type SVS, de l'anglais *Synthetic Vision System.*

Les dispositifs de visualisation de type viseur porté sur la tête comportent des capteurs de la direction de la ligne de visée (ou direction du regard) de l'opérateur de pilotage, permettant à l'opérateur de désigner facilement des points remarquables dans le paysage (par superposition avec un symbole affiché qui représente la ligne de visée).

Il est prévu d'afficher divers symboles en superposition de l'image réelle ou synthétique, par exemple : symbole d'intrus détecté, symbole représentatif de la ligne de visée de l'opérateur, symboles d'amers (points caractéristiques) dans le paysage observé.

En complément, il est envisagé d'associer un tel dispositif de visualisation 22 tel que décrit ci-dessus à un casque audio, comportant par exemple un microphone et des écouteurs, ce qui permet l'utilisation d'un logiciel de reconnaissance vocale pour obtenir des commandes vocales de l'opérateur de pilotage. Avantageusement, diverses informations, par exemple transmises par les systèmes d'interface 16, 18, sont vocalisées par un système de synthèse vocale et transmises à l'opérateur de pilotage via les écouteurs.

L'IHM 20 comporte en outre des écrans 24, 26 de situation et de dialogue, permettant de fournir à l'opérateur de pilotage des informations complémentaires utiles. Par exemple, une carte d'une zone survolée, mise à jour en temps réel, est affichée sur l'écran 24, et des informations complémentaires, par exemple des informations relatives à des contraintes d'environnement reçues (e.g. informations relatives aux conditions météorologiques) des systèmes d'interface 16, 18, sont affichées sur l'écran 26.

L'IHM 20 comporte en outre une interface d'organes de commande 28, qui comporte par exemple des boutons physiques et/ou des boutons mis en oeuvre sur un écran tactile, les organes de commande étant actionnables par l'opérateur de pilotage. Les commandes sont transmises au système 10 de pilotage qui est configuré pour commander les systèmes 6 de contrôle de l'aéronef.

Ainsi, sur commande de l'opérateur de pilotage, le système de pilotage 10 prend le contrôle à la place du système de pilotage automatique 8, dans la limite des fonctionnalités prévues.

Selon l'invention, les organes de commande 28 accessibles à l'opérateur de pilotage sont limités en nombre et en fonctionnalités : l'opérateur de pilotage peut uniquement effectuer des commandes parmi un ensemble de commandes prédéterminé. D'autres commandes de pilotage sont uniquement dévolues au système de pilotage automatique 8.

Dans le système de pilotage 2, une trajectoire de vol nominale, correspondant à une mission, est préprogrammée et enregistrée dans une mémoire du système de commande 4.

Dans un premier mode de réalisation de l'invention, toute commande de l'opérateur de pilotage est suivie d'une reprise du système de pilotage automatique 8 embarqué pour un retour à la trajectoire nominale.

Par exemple, comme décrit plus en détail ci-après, l'opérateur de pilotage peut commander via l'interface d'organes de commande 28 un évitement d'obstacle détecté visuellement, l'évitement étant effectué dans des marges de déviation autorisées, mémorisées par rapport à la trajectoire de vol préprogrammée. Ce type de fonctionnalité est également appelé « voir et éviter ».

De même, l'opérateur de pilotage a la possibilité de commander un recalage de la position de navigation.

Ainsi, dans un scénario d'application, l'opérateur de pilotage a la possibilité de commander des manoeuvres (e.g. évitement d'obstacles), dans des cas où le niveau de sûreté de fonctionnement des systèmes de détection anticollision et du système de navigation est inférieur ou égal à un niveau seuil prédéterminé, correspondant à un niveau de sécurité requis.

Dans un deuxième mode de réalisation de l'invention, l'opérateur de pilotage dispose en plus de commandes pour effectuer un vol en mode semi-automatique. Dans ce cas l'ensemble de commandes prédéterminé comporte des commandes de direction (route de consigne) de déplacement de l'aéronef, de modification de l'altitude de l'aéronef. Les plages de vitesse et de pente sont limitées dans des marges calculées pour assurer la sécurité du vol vis-à-vis de limites mécaniques et de limites d'environnement connues (par exemple, l'altitude minimum de vol).

Cependant, de préférence, les phases de montée initiale au décollage et de descente à l'atterrissage ne sont pas commandables par l'opérateur de pilotage, mais sont effectuées par le système de pilotage automatique 8 embarqué.

De préférence, l'opérateur de pilotage dispose également d'une commande permettant de basculer entre le mode de pilotage automatique et le mode de pilotage semi-automatique.

De préférence, le système de pilotage 2 met également en oeuvre un module 25 d'enregistrement des commandes et interventions de l'opérateur de pilotage, en lien avec des informations reçues des systèmes de détection anticollision 12, de navigation 14 et optionnellement des systèmes d'interface 16, 18, afin d'enregistrer les non-détections, fausses alarmes, dérives de position dans le but d'une analyse ultérieure et d'une amélioration de ces systèmes 12, 14.

Dans un mode de réalisation, le système de commande 4 est mis en oeuvre par un dispositif électronique programmable tel un ordinateur de bord, comportant une mémoire électronique, adaptée à mémoriser des données sous forme de fichiers ou de registres par exemple, et au moins un processeur, apte à exécuter des calculs et des instructions de code de programme d'ordinateur lorsque le dispositif de commande 4 est mis sous tension.

En variante, le dispositif de commande est réalisé sous forme d'un composant logique programmable, tel qu'un FPGA (de l'anglais *Field Programmable Gate Array),* un GPU (processeur graphique) ou un GPGPU (de l'anglais *General-purpose processing on graphies processing*), ou encore sous forme d'un circuit intégré dédié, tel qu'un ASIC (de l'anglais *Application Spécifie Integrated Circuit).*

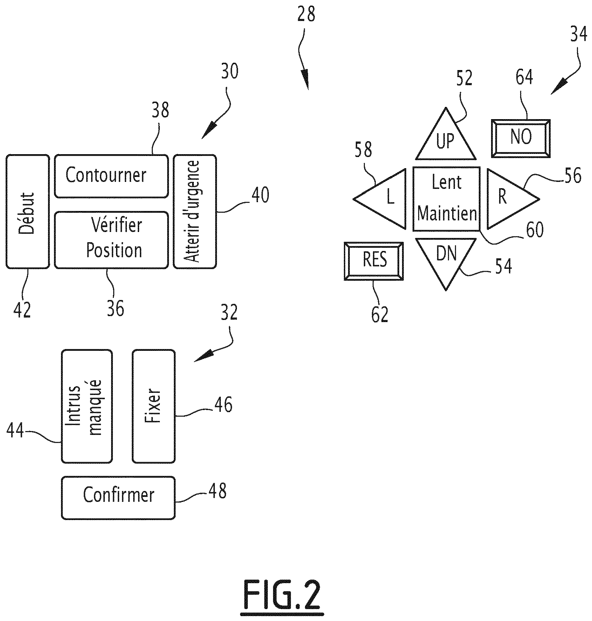

La figure 2 illustre un mode de réalisation de l'interface d'organes de commande 28 qui sont accessibles à l'opérateur de pilotage.

Dans ce mode de réalisation, l'interface d'organes de commande 28 comporte trois ensembles de boutons de commande : un premier ensemble de boutons de commande 30, un deuxième ensemble de boutons de commande 32, un troisième ensemble de boutons de commande 34.

Les boutons de commande sont réalisés, comme indiqué ci-dessus, soit sous forme d'éléments graphiques sélectionnables sur écran tactile, soit sous forme de boutons mécaniquement actionnables.

Le premier ensemble de boutons de commande 30 comporte des boutons de commande de vol :
- un bouton de commande « position check » 36 qui est actionné lorsque l'opérateur de pilotage détecte un écart de positionnement par rapport à la trajectoire préprogrammée. L'actionnement de ce bouton 36 permet de déclencher puis d'exécuter un recalage de position sur un ou plusieurs points de référence définis par l'opérateur de pilotage sur l'IHM 20, par exemple sur le dispositif de visualisation 22 ;
- un bouton de command « GO AROUND » 38 qui commande l'exécution d'un circuit automatique prédéfini d'interruption de l'atterrissage, puis un nouvel essai d'atterrissage. De préférence, le nombre d'interruptions commandé par ce bouton 38 pour un même atterrissage est plafonné à un nombre limite d'interruptions, par exemple égal à un ou deux, une diversion automatique vers une autre destination étant mise en oeuvre si le nombre limite d'interruptions est atteint. Ce bouton 38 est actionné par exemple si l'opérateur de pilotage constate visuellement la présence d'un obstacle sur la piste d'atterrissage ;
- un bouton de commande « LAND ASAP » 40 permettant de commander un atterrissage d'urgence, dès que possible ;
- un bouton de commande « START » 42 permettant de commander l'entrée dans ce mode de commande, dont typiquement initier le décollage au départ ; la commande du vol de l'aéronef au décollage est effectuée par le système de pilotage automatique 8.

Le deuxième ensemble de boutons de commande 32 comporte des boutons de commande « à vue » :
- Un bouton « Missing Intruder » 44 permet de signaler la présence d'un intrus ou d'un obstacle qui n'a pas été détecté par le système de détection anticollision 12. La position de l'intrus ou de l'obstacle est par exemple indiquée par l'opérateur de pilotage à l'aide du dispositif de visualisation 22, et est mémorisée dans une mémoire du système de commande 4;
- Un bouton de commande « FIX » 46 pour désigner un point sur une carte visualisée ou dans le paysage vu à travers le HUD/HMD, par exemple un point dit point remarquable, qui est un point correspondant à la position réelle de l'aéronef, ou un point de toucher visé sur la piste d'atterrissage ou un autre point remarquable ;
- Un bouton « Confirm » 48 permet de confirmer par exemple qu'une détection d'intrus ou d'obstacle par le système de détection anticollision 12 est bien corrélée par la vision directe de l'opérateur de pilotage.

Le troisième ensemble de boutons de commande 34 comporte des boutons de commande d'évitement :
- Boutons de commande de modification de la direction de l'aéronef dans le plan vertical 52, 54 ou horizontal 56, 58. Plus précisément, le bouton 52 « UP » permet de commander une montée de l'aéronef et le bouton 54 « DN » une descente de l'aéronef, dans des marges de sécurité prédéfinies. Le bouton 56 « R » permet de commander un décalage vers la droite dans le plan horizontal, et le bouton 58 « L » permet de commander un décalage vers la gauche dans le plan horizontal.
- Le bouton « Slow/Hold » 60 permet de diminuer la vitesse longitudinale d'une valeur élémentaire prédéterminée dans des marges de modification prédéterminées, pouvant aller jusqu'à zéro pour un appareil capable de vol stationnaire. Le terme vitesse longitudinale désigne ici le module du vecteur vitesse de l'aéronef ;
- Le bouton « RES » 62 permet de revenir sur la trajectoire de vol préprogrammée (ou trajectoire nominale) de l'aéronef ;
- Le bouton « NO » 64 permet d'inhiber manuellement une manoeuvre d'évitement d'obstacle détecté par le système 12 de détection anticollision, par exemple dans le cas où l'opérateur de pilotage considère que la détection d'obstacle est erronée ou s'il souhaite effectuer l'évitement via les boutons 52 à 58.

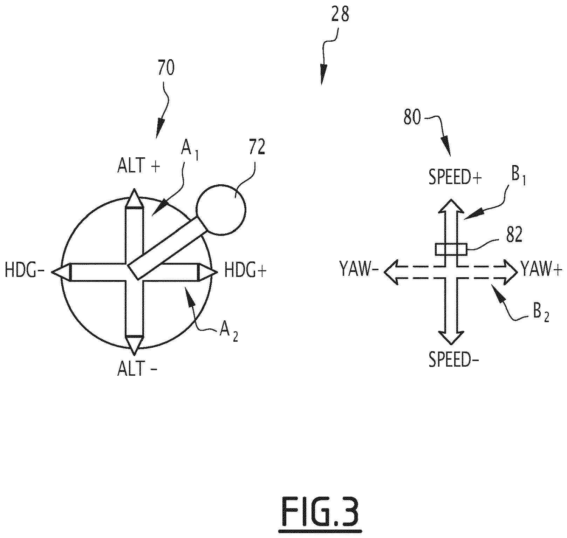

La figure 3 illustre schématiquement des organes de commande complémentaires de l'interface d'organes de commande 28, accessibles à l'opérateur de pilotage pour la mise en oeuvre du pilotage semi-automatique.

Dans un mode de réalisation, les organes de commande illustrés à la figure 3 sont présentés en plus des organes de commande décrits ci-dessus en référence à la figure 2.

Les organes de commande 70 sont destinés à commander la trajectoire en mode semi-automatique. Ils comportent par exemple un manche ou un joystick 72, qui est différent d'un manche de pilotage conventionnel.

Le manche 72 est adapté à être déplacé selon deux axes orthogonaux A₁, A₂, pour modifier un paramètre de vol permettant de modifier la hauteur ou l'altitude de l'aéronef et la route de consigne de l'aéronef. Le déplacement selon l'axe A₁ est un premier type de commande appliqué sur le manche 72, et le déplacement selon l'axe A₂ est un deuxième type de commandé appliqué sur le manche 72.

Dans un mode de réalisation, le déplacement du manche 72 sur l'axe A₁ en direction de ALT+ permet d'augmenter l'altitude, et le déplacement du manche 72 sur l'axe A₁ en direction de ALT- permet de diminuer l'altitude. Le déplacement du manche sur l'axe A₂ permet de modifier la route de consigne, augmentant la composante de vitesse vers la droite en déplaçant le manche 72 vers HDG+ ou vers la gauche en déplaçant le manche 72 vers HDG-.

En variante, l'organe de commande 72 n'est pas un manche, mais les déplacements respectifs sur les axes A₁, A₂ sont effectués au moyen de curseurs.

De préférence, un indicateur visuel non représenté, est affiché sur le dispositif de visualisation 22 (viseur tête haute) ou sur un des écrans d'affichage 24, 26 pour indiquer à l'opérateur de pilotage l'altitude et la route ainsi commandées par rapport à l'altitude et à la route courantes.

Optionnellement, un organe de commande 80 destiné à commander la vitesse et la trajectoire en mode semi-automatique est également présent. Dans le mode de réalisation illustré, l'organe de commande 80 comporte un curseur 82, adapté à être déplacé selon un premier axe B₁ pour commander des variations de la vitesse longitudinale (i.e. du module du vecteur vitesse) en plus (en déplaçant le curseur 82 vers SPEED+) ou en moins (en déplaçant le curseur 82 vers SPEED-), dans une plage de variation de vitesse autorisée autour d'une valeur de vitesse nominale.

Pour des aéronefs capables de vols stationnaire à la verticale d'un point donné (par exemple multirotors, hélicoptères) , la diminution de la vitesse permet d'atteindre une vitesse égale à zéro. Dans ce cas, l'aéronef se mettra en vol stationnaire.

Avantageusement, les organes de commande sont également prévus pour ce cas d'utilisation.

Le déplacement du curseur 82 sur un deuxième axe B₂ permet de provoquer une rotation de l'aéronef sur lui-même, le sens de rotation étant défini par le sens de déplacement du curseur 82 (directions YAW+ ou YAW-). De plus, avantageusement, sur un aéronef de ce type, une fois en vol stationnaire, le manche 72 peut être utilisé pour provoquer des déplacements latéraux en translation selon le déplacement selon l'axe A₂ ou verticaux en translation selon les déplacements du manche 72 selon l'axe A₁.

La sortie du mode de vol stationnaire peut être commandée par l'actionnement du bouton « RES » 62, et le retour au suivi d'une trajectoire de vol préprogrammée par l'actionnement du bouton « START » 42.

Le passage en mode semi-automatique est par exemple commandé par une action de l'opérateur de pilotage sur le manche 72.

Ainsi, dans un mode de réalisation, les organes de commande illustrés schématiquement aux figures 2 et 3 sont tous présents dans l'interface d'organes de commande 28 et sont adaptés à coopérer comme décrit ci-dessus.

Dans une variante, lorsque les organes de commande 70, 80 du mode semi-automatique sont présents, une partie du troisième ensemble de boutons de commande 34 est supprimé, le manche 72 en coopération avec le curseur 82 permettant d'effectuer des commandes de décalage temporaire de l'aéronef par rapport à une trajectoire préprogrammée. Par exemple, les boutons 52, 54, 56, 58 et 60 sont supprimés.

Des variantes des organes de commande de mode semi-automatique sont bien entendu envisageables.

Par exemple, au lieu de commander une modification d'altitude, il est envisageable de commander une modification de pente « Flight Path Angle » (FPA+ / FPA -) ou de vitesse verticale (VS : Vertical speed), qui sont d'autres paramètres de vol permettant de modifier l'altitude.

Avantageusement, un même jeu d'organes de commande est configuré pour être utilisé sur divers types d'aéronefs, ayant différentes formules aérodynamiques et motrices : avion à aile fixe, hélicoptère, aéronef multirotors, aéronefs hybrides ayant à la fois des ailes et des rotors sustentateurs.

Avantageusement, un jeu d'organes de commande minimisé et peu encombrant est mis en oeuvre, et l'opérateur de pilotage a accès à un ensemble limité de commandes, d'autres commandes étant réservées exclusivement au système de pilotage automatique.

Avantageusement, le système de pilotage automatique embarqué peut exécuter des commandes de pilotage issues desdits système de détection anticollision et système de navigation, avec la capacité de les inhiber ou les suppléer par l'opérateur de pilotage si ces systèmes de détection anticollision et de navigation ont un niveau de sûreté de fonctionnement inférieur ou égal à un niveau de sécurité requis.

Avantageusement, lesdits système de détection anticollision et système de navigation peuvent être embarqués et utilisés pour acquérir de l'expérience et les améliorer alors même qu'ils n'ont pas encore le niveau de sûreté de fonctionnement requis pour être autonomes.

Avantageusement, le système de pilotage proposé est peu encombrant, adapté à divers type d'aéronef et facile à utiliser par un même opérateur de pilotage sur divers types d'aéronefs. Ainsi, la formation des opérateurs de pilotage est largement allégée.

## Revendications

1. Système de pilotage d'aéronef, le système comportant un système de commande (4) configuré pour actionner des contrôles (6) de vol de l'aéronef selon une trajectoire de vol préprogrammée, le système de commande comportant un système de pilotage automatique (8), le système de pilotage d'aéronef (2) comportant en outre une interface homme-machine (20) comportant une interface d'organes de commande (28) actionnables par un opérateur de pilotage pour actionner des contrôles et modifier le vol de l'aéronef, ladite interface d'organes de commande (28) comportant un nombre limité d'organes de commande actionnables par ledit opérateur de pilotage, permettant d'effectuer uniquement des commandes de pilotage parmi un ensemble prédéterminé de commandes de pilotage, ledit nombre limité d'organes de commande étant inférieur à la totalité des fonctionnalités de pilotage disponibles, ledit ensemble de commandes comportant des commandes d'évitement d'obstacles à vue, actionnées par des organes de commande de ladite interface d'organes de commande (28) associés, **caractérisé en ce que** ladite interface d'organes de commande (28) comporte un organe (48) permettant de confirmer une détection d'obstacle, des organes de commande (52, 54, 56, 58) de modification de la direction et de l'orientation de l'aéronef, ainsi que :
. des organes de commande (32, 44, 46) permettant de signaler un obstacle et/ou un point remarquable, l'interface homme machine (20) étant configurée pour permettre à l'opérateur de pilotage d'indiquer une position dudit obstacle par rapport à une position de l'aéronef, et
. un organe de commande (64) permettant d'inhiber une manoeuvre d'évitement automatique d'obstacle.

2. Système de pilotage d'aéronef selon la revendication 1, dans lequel l'ensemble prédéterminé de commandes comporte des commandes permettant d'exécuter des manoeuvres d'urgence préprogrammées.

3. Système de pilotage d'aéronef selon la revendication 2, dans lequel une desdites manoeuvres d'urgence préprogrammées est un atterrissage d'urgence, ladite interface d'organes de commande (28) comportant un organe de commande (40) d'atterrissage d'urgence.

4. Système de pilotage d'aéronef selon l'une des revendications 2 ou 3, dans lequel une desdites manoeuvres d'urgence préprogrammées est une commande d'interruption d'atterrissage par actionnement d'un organe de commande (38) associé, ledit actionnement commandant un vol selon un circuit automatique prédéfini et une mise en oeuvre automatique d'un nouvel essai d'atterrissage, ou commandant une diversion automatique vers une autre destination.

5. Système de pilotage d'aéronef selon l'une des revendications 1 à 4, dans lequel ledit ensemble de commandes comporte en outre:
. une commande pour déclencher puis exécuter un recalage de position de l'aéronef, actionnée par un organe de commande (36) associé,
. une commande de retour à la trajectoire de vol préprogrammée contrôlée par le pilote automatique, actionnée par un organe de commande (62) associé.

6. Système de pilotage d'aéronef selon l'une des revendications 1 à 5, dans lequel ladite interface homme machine (20) comporte un dispositif de visualisation tête haute (22) pouvant être porté par l'opérateur de pilotage, et sur lequel sont affichées des informations en superposition par rapport à un environnement visible de l'aéronef.

7. Système de pilotage d'aéronef selon l'une quelconque des revendications 1 à 6, dans lequel l'interface d'organes de commande (28) comporte en outre des organes (70, 80) de commande pour un pilotage en mode semi-automatique par l'opérateur de pilotage.

8. Système de pilotage d'aéronef selon la revendication 7, l'aéronef suivant une trajectoire ayant une altitude et une route de consigne associées, dans lequel lesdits organes de commande pour pilotage en mode semi-automatique comportent un organe de commande (72) adapté à être commandé, selon un premier type de commande, pour modifier un paramètre de vol permettant de modifier la hauteur de l'aéronef, parmi l'altitude, la pente ou la vitesse verticale, et adapté à être commandé, selon un deuxième type de commande, pour modifier la route de consigne de l'aéronef.

9. Système de pilotage d'aéronef selon la revendication 8, dans lequel ledit organe de commande (72) pour pilotage en mode semi-automatique est un manche adapté à être déplacé selon un premier axe (A₁) selon ledit premier type de commande, et à être déplacé selon un deuxième axe (A₂) selon ledit deuxième type de commande.

10. Système de pilotage d'aéronef selon la revendication 8 ou 9, comportant en outre un organe de commande (82) destiné à commander une variation de vitesse longitudinale de l'aéronef dans une plage de variation de vitesse autorisée autour d'une valeur de vitesse nominale.

11. Système de pilotage d'aéronef selon l'une des revendications 1 à 10, dans lequel ladite interface d'organes de commande (28) est configurée pour permettre un changement de fonctionnalités d'au moins une partie des organes de commande en fonction d'un type d'aéronef.

12. Système de pilotage d'aéronef selon l'une des revendications 10 à 11, l'aéronef piloté étant capable de vol stationnaire, dans lequel l'organe de commande (82) destiné à commander une variation de vitesse longitudinale est adapté à commander un vol stationnaire, et dans lequel, en vol stationnaire, un desdits organes de commande (72) pour pilotage en mode semi-automatique est actionnable par l'opérateur de pilotage pour provoquer des déplacements latéraux en translation et des déplacements verticaux en translation.

## Patentansprüche

1. System zur Steuerung eines Luftfahrzeugs, wobei das System ein Steuersystem (4) umfasst, das dazu ausgelegt ist, Kontrollen (6) des Flugs des Luftfahrzeugs gemäß einer vorprogrammierten Flugbahn zu betätigen, wobei das Steuersystem ein automatisches Steuerungssystem (8) aufweist, wobei das System zur Steuerung eines Luftfahrzeugs (2) ferner eine Mensch-Maschine-Schnittstelle (20) mit einer Steuerorganschnittstelle (28) aufweist, die von einem Piloten betätigbar sind, um Kontrollen zu betätigen und den Flug des Luftfahrzeugs zu verändern, wobei die Steuerorganschnittstelle (28) eine begrenzte Anzahl von Steuerorganen umfasst, die von dem Piloten betätigbar sind, die gestatten, nur Steuerungsbefehle aus einer zuvor festgelegten Gruppe von Steuerungsbefehlen auszuführen, wobei die begrenzte Anzahl von Steuerorganen kleiner als die Gesamtheit der verfügbaren Steuerungsfunktionen ist, wobei die Gruppe von Befehlen Befehle zur Vermeidung von Hindernissen auf Sicht aufweist, die von Steuerorganen der zugeordneten Steuerorganschnittstelle (28) betätigt werden, **dadurch gekennzeichnet dass** die Steuerorganschnittstelle (28) ein Organ (48) aufweist, das gestattet, eine Hindernisdetektion zu bestätigen, Steuerorgane (52, 54, 56, 58) zur Änderung der Richtung und der Ausrichtung des Luftfahrzeugs sowie:
. Steuerorgane (32, 44, 46), die gestatten, ein Hindernis und/oder einen bemerkenswerten Punkt zu melden, wobei die Mensch-Maschine-Schnittstelle (20) dazu ausgelegt ist, dem Piloten zu ermöglichen, eine Position des Hindernisses in Bezug auf eine Position des Luftfahrzeugs anzuzeigen, und
. ein Steuerorgan (64), das gestattet, ein automatisches Hindernisausweichmanöver zu unterbinden.

2. System zur Steuerung eines Luftfahrzeugs nach Anspruch 1, wobei die zuvor festgelegte Gruppe von Befehlen Befehle aufweist, die gestatten, vorprogrammierte Notmanöver durchzuführen.

3. System zur Steuerung eines Luftfahrzeugs nach Anspruch 2, wobei eins der vorprogrammierten Notmanöver eine Notlandung ist, wobei die Steuerorganschnittstelle (28) ein Notlandesteuerorgan (40) aufweist.

4. System zur Steuerung eines Luftfahrzeugs nach einem der Ansprüche 2 oder 3, wobei eins der vorprogrammierten Notmanöver ein Befehl zum Abbrechen der Landung durch Betätigen eines zugeordneten Steuerorgans (38) ist, wobei die Betätigung einen Flug gemäß einer vordefinierten automatischen Schleife und eine automatische Durchführung eines neuen Landeversuchs befiehlt oder eine automatische Umlenkung zu einem anderen Ziel befiehlt.

5. System zur Steuerung eines Luftfahrzeugs nach einem der Ansprüche 1 bis 4, wobei die Gruppe von Befehlen ferner aufweist:
. einen Befehl zum Auslösen und anschließenden Ausführen einer Positionsneubestimmung des Luftfahrzeugs, der von einem zugeordneten Steuerorgan (36) gegeben wird,
. einen Befehl zur Rückkehr zum vorprogrammierten Flugweg, der vom Autopiloten gesteuert wird, der von einem zugeordneten Steuerorgan (62) gegeben wird.

6. System zur Steuerung eines Luftfahrzeugs nach einem der Ansprüche 1 bis 5, wobei die Mensch-Maschine-Schnittstelle (20) eine Head-up-Display-Vorrichtung (22) aufweist, die vom Piloten getragen werden kann und auf der Informationen in Bezug auf eine sichtbare Umgebung des Flugzeugs überlagert angezeigt werden.

7. System zur Steuerung eines Luftfahrzeugs nach einem der Ansprüche 1 bis 6, wobei die Steuerorganschnittstelle (28) ferner Steuerorgane (70, 80) für eine Steuerung im halbautomatischen Modus durch den Piloten umfasst.

8. System zur Steuerung eines Luftfahrzeugs nach Anspruch 7, wobei das Luftfahrzeug einer Flugbahn mit einer zugeordneten Höhe und einem zugeordneten Sollkurs folgt, wobei die Steuerorgane für die Steuerung im halbautomatischen Modus ein Steuerorgan (72) umfassen, das geeignet ist, gemäß einem ersten Befehlstyp zur Änderung eines Flugparameters gesteuert zu werden, der es gestattet, die Höhe des Luftfahrzeugs zu ändern, darunter die Flughöhe, die Neigung oder die Vertikalgeschwindigkeit, und geeignet ist, gemäß einem zweiten Befehlstyp zur Änderung der Sollflugbahn des Luftfahrzeugs gesteuert zu werden.

9. System zur Steuerung eines Luftfahrzeugs nach Anspruch 8, wobei das Steuerorgan (72) für die Steuerung im halbautomatischen Modus ein Steuerknüppel ist, der geeignet ist, gemäß einer ersten Achse (A₁) gemäß dem ersten Befehlstyp und gemäß einer zweiten Achse (A₂) gemäß dem zweiten Befehlstyp bewegt zu werden.

10. System zur Steuerung eines Luftfahrzeugs nach Anspruch 8 oder 9, das ferner ein Steuerorgan (82) aufweist, das dazu bestimmt ist, eine Änderung der Längsgeschwindigkeit des Luftfahrzeugs innerhalb eines zulässigen Geschwindigkeitsänderungsbereichs um einen Nenngeschwindigkeitswert zu befehlen.

11. System zur Steuerung eines Luftfahrzeugs nach einem der Ansprüche 1 bis 10, wobei die Steuerorganschnittstelle (28) dazu ausgelegt ist, eine Änderung der Funktionen von mindestens einem Teil der Steuerorgane in Abhängigkeit von einem Luftfahrzeugtyp zu gestatten.

12. System zur Steuerung eines Luftfahrzeugs nach einem der Ansprüche 10 bis 11, wobei das gesteuerte Flugzeug zu einem Schwebeflug fähig ist, wobei das Steuerorgan (82), das zum Befehlen einer Änderung der Längsgeschwindigkeit bestimmt ist, geeignet ist, einen Schwebeflug zu steuern, und wobei im Schwebeflug eins der Steuerorgane (72) zur Steuerung im halbautomatischen Modus vom Piloten betätigbar ist, um seitliche Translationsbewegungen und vertikale Translationsbewegungen zu bewirken.

## Claims

1. Aircraft piloting system, the system comprising a control system (4) configured to actuate controls (6) for flying the aircraft along a preprogrammed flight path, the control system comprising an autopilot system (8), the aircraft control system (2) further comprising a man-machine interface (20) comprising an interface of control elements (28) that can be actuated by a control operator to actuate controls and modify the flight of the aircraft, said control element interface (28) comprising a limited number of control elements that can be actuated by said control operator, making it possible to carry out only piloting commands from a predetermined set of piloting commands, said limited number of control elements being less than all the available piloting functionalities, said set of commands comprising visual obstacle avoidance commands, actuated by associated control members of said control member interface (28), **characterised in that** said control member interface (28) comprises a member (48) for confirming obstacle detection, control members (52, 54, 56, 58) for modifying the direction and orientation of the aircraft, and:
. control elements (32, 44, 46) enabling an obstacle and/or a remarkable point to be signalled, the man-machine interface (20) being configured to enable the flight operator to indicate a position of the said obstacle relative to a position of the aircraft, and
. a control device (64) for inhibiting an automatic obstacle avoidance manoeuvre.

2. Aircraft piloting system of claim 1, wherein the predetermined set of controls comprises controls for executing pre-programmed emergency manoeuvres.

3. Aircraft piloting system of claim 2, wherein one of said pre-programmed emergency manoeuvres is an emergency landing, said controller interface (28) comprising an emergency landing controller (40).

4. Aircraft piloting system according to one of claims 2 or 3, in which one of the said preprogrammed emergency manoeuvres is a command to abort landing by actuation of an associated control member (38), the said actuation commanding a flight according to a predefined automatic circuit and automatic implementation of a new landing attempt, or commanding an automatic diversion to another destination.

5. Aircraft piloting system according to one of claims 1 to 4, wherein said control assembly further comprises:
. a command to initiate and then execute a position readjustment of the aircraft, actuated by an associated control unit (36),
. a command to return to the pre-programmed flight path controlled by the autopilot, actuated by an associated control unit (62).

6. Aircraft piloting system according to one of claims 1 to 5, in which the said man-machine interface (20) comprises a head-up display device (22) which can be worn by the pilot operator, and on which information is displayed superimposed with respect to a visible environment of the aircraft.

7. Aircraft piloting system according to any one of claims 1 to 6, in which the control member interface (28) further comprises control members (70, 80) for control in semi-automatic mode by the control operator.

8. Aircraft piloting system according to claim 7, the aircraft following a trajectory having an altitude and an associated set course, in which said control members for piloting in semi-automatic mode comprise a control member (72) adapted to be controlled according to a first type of control, to modify a flight parameter enabling the height of the aircraft to be modified, from among altitude, slope or vertical speed, and adapted to be controlled, according to a second type of control, to modify the reference route of the aircraft.

9. Aircraft piloting system according to claim 8, in which said control member (72) for control in semi-automatic mode is a control stick adapted to be moved along a first axis (A₁) according to said first type of control, and to be moved along a second axis (A₂) according to said second type of control.

10. Aircraft piloting system according to claim 8 or 9, further comprising a control member (82) intended to control a variation in the longitudinal speed of the aircraft within an authorised speed variation range around a nominal speed value.

11. Aircraft piloting system according to one of claims 1 to 10, in which the said control unit interface (28) is configured to allow a change in functionality of at least some of the control units as a function of an aircraft type.

12. Aircraft piloting system according to one of claims 10 to 11, the aircraft being piloted being capable of hovering flight, in which the control member (82) for controlling a variation in longitudinal speed is adapted to hovering flight, and in which, in hovering flight, one of the said control members (72) for piloting in semi-automatic mode can be actuated by the pilot operator to cause lateral translational displacements and vertical translational displacements.
